# EUROPÄISCHE PATENTSCHRIFT

(11) **EP 3 631 372 B1**
(45) Veröffentlichungstag und Bekanntmachung des Hinweises auf die Patenterteilung: **19.05.2021**
(21) Anmeldenummer: 17728142.5
(22) Anmeldetag: 31.05.2017
(51) Int. Cl.: G01D 5/244, G01D 11/24

(54) **SENSOREINHEIT FÜR EIN DREHWINKELMESSSYSTEM SOWIE EIN DREHWINKELMESSSYSTEM MIT EINER DERARTIGEN SENSOREINHEIT**
SENSOR UNIT FOR A ROTATIONAL ANGLE MEASUREMENT SYSTEM AND ROTATIONAL ANGLE MEASUREMENT SYSTEM HAVING SUCH A SENSOR UNIT
UNITÉ À CAPTEUR POUR SYSTÈME DE MESURE D'ANGLE DE ROTATION ET SYSTÈME DE MESURE D'ANGLE DE ROTATION ÉQUIPÉ D'UNE TELLE UNITÉ DE DÉTECTION

(43) Veröffentlichungstag der Anmeldung: 08.04.2020
(73) Patentinhaber: Fraba B.V., 6416 SG Heerlen (NL)
(72) Erfinder: LÖKEN, Michael, 52428 Jülich (DE)
(74) Vertreter: terpatent Patentanwälte ter Smitten Eberlein-Van Hoof Rütten Daubert
(86) Internationale Anmeldenummer: PCT/EP2017/063219
(87) Internationale Veröffentlichungsnummer: WO 2018/219454

(56) Entgegenhaltungen:
- DE-A1- 19 645 605
- DE-A1-102005 039 081
- DE-A1-102014 118 041

## Beschreibung

Die Erfindung betrifft eine Sensoreinheit für ein Drehwinkelmesssystem zum Erfassen einer Drehbewegung einer Antriebswelle, mit einer Gehäuseanordnung, die zumindest ein topfförmiges Gehäuseteil aufweist, in der eine Sensorleiterplatte, die auf einem Trägerorgan angeordnet ist, vorgesehen ist, derart, dass die Sensorleiterplatte im Betriebszustand in Bezug auf die Antriebswelle über Lagermittel feststehend in der Gehäuseanordnung gelagert ist. Des Weiteren betrifft die Erfindung ein Drehwinkelmesssystem zum Erfassen einer Drehbewegung einer Antriebswelle, die an einem freien Ende drehfest eine Magnet-Erregereinheit aufweist.

Derartige Drehwinkelmesssysteme dienen zur Messung von Drehbewegungen einer Welle und werden vielfach auch als Winkelmesseinrichtung, Drehwinkelsensor oder Drehgeber bezeichnet. Sie werden insbesondere zur Steuerung und Überwachung von Maschinen und elektrischen Motoren eingesetzt. Eine besondere Rolle spielen dabei kontaktfreie Drehwinkelmesssysteme, beispielsweise optische oder magnetische Systeme, da sie aufgrund der verschleißfreien Sensorik eine lange Lebensdauer haben. Bei Magnet-basierten Drehwinkelmesssystemen wird die Umdrehung einer Welle mittels einer Messeinheit magnetisch erfasst, wobei die Messeinheit insbesondere eine rotierende Erregereinheit, wie einen Permanentmagnet, und eine feststehende Sensoreinheit mit zumindest einem Sensor, wie beispielsweise einem Hall- und/oder Wiegand-Sensor, umfasst. Der Hall-Sensor wird hierbei für die Singleturn-Umdrehung und der Wiegand-Sensor für die Multiturn-Umdrehung eingesetzt. Die Messeinheit ist hierbei jedoch zumeist an dem freien Ende der zu überwachenden Welle angeordnet.

Eine derartige Sensoreinheit bzw. ein derartiges Drehwinkelmesssystem ist beispielsweise aus der DE 10 2015 101 248 A1 bekannt. Hierbei wird die Sensoreinheit erst bei der Endmontage des Drehwinkelmesssystems fertiggestellt, wobei das Trägerorgan mit der Sensorleiterplatte zunächst auf einem Gehäuseteil durch das die Antriebswelle hindurch reicht befestigt wird, und nachfolgend eine Gehäuseanordnung ebenfalls mittels Befestigungsmitteln vorgesehen wird, in der zumindest das Trägerorgan und die Sensorleiterplatte geschützt aufgenommen sind. Es sollte deutlich sein, dass ein derartiger Montageprozess einer hochsensiblen Sensoreinheit sich bei kleinsten Montagefehlern nachteilig auf die Funktion der Sensoreinheit bzw. des Drehwinkelmesssystems auswirken kann. Insbesondere die Befestigung des Trägerorgans der Sensorleiterplatte auf dem Gehäuseteil, durch das die Antriebswelle hindurch reicht, erweist sich als sehr fehleranfällig. Darüber hinaus kann der Montageprozess aufgrund des geringen Bauraumes insbesondere beim Einsatz von Befestigungsschrauben erschwert werden.

Aus der DE 10 2005 039 084 A1 ist ferner eine Sensoreinheit bzw. ein Drehwinkelmesssystem bekannt, wobei die Lagermittel für die Sensorleiterplatte als Formschluss-Kraftschluss-Anordnung ausgebildet sind. Im Speziellen sind die Lagermittel als Zentrierstifte ausgebildet, die bei der Montage in entsprechende Aufnahmen eines Wellenflanschkörpers eingepresst werden. Es sollte deutlich sein, dass sich bereits kleinste Montagefehler beim Einpressprozess nachteilig auf die Funktion der hochsensiblen Sensoreinheit bzw. des Drehwinkelmesssystems auswirken können.

Aufgabe der Erfindung ist es daher, eine Sensoreinheit bzw. ein Drehwinkelmesssystem bereit zu stellen, das den oben genannten Nachteil vermeidet.

Diese Aufgabe wird dadurch gelöst, dass die Formschluss-Kraftschluss-Anordnung mindestens ein mit einer Gehäuseteil-Öffnung zusammenwirkendes Einrastorgan und mindestens ein Federorgan aufweist, derart, dass im Vormontagezustand das Trägerorgan in axialer Richtung beweglich in der Gehäuseanordnung gelagert ist und im Betriebszustand das Trägerorgan über das Federorgan in axialer Richtung kraftschlüssig im topfförmigen Gehäuseteil fixiert ist. Auf diese Weise ist keine gesonderte Befestigung des Trägerorgans, beispielsweise mittels Befestigungsschrauben, mit der Sensorleiterplatte erforderlich, Die Endmontage der Sensoreinheit wird im Wesentlichen lediglich durch die Befestigung der Gehäuseanordnung vorgenommen. Dadurch, dass die Sensorleiterplatte-Lagermittel als Formschluss-Kraftschluss-Anordnung ausgebildet sind, besitzt das Trägerorgan mit der Sensorleiterplatte im vormontierten Zustand zumindest eine Beweglichkeit in axialer Richtung, wobei das Trägerorgan jedoch durch eine Formschluss-Anordnung sicher In der Gehäuseanordnung gehalten ist. Erst durch den Endmontagevorgang wird ein Kraftschluss des Trägerorgans in der Gehäuseanordnung hergestellt, wodurch die Sensorleiterplatte im Betriebszustand in Bezug auf die Antriebswelle feststehend gelagert ist. Ein weiterer großer Vorteil dieser erfindungsgemäßen Sensoreinheit besteht darin, dass die Sensoreinheit komplett vormontiert werden kann, wodurch eine einfache Lagerung und ein sicherer Transport gewährleistet sind. Die erfindungsgemäße Formschluss-Kraftschluss-Anordnung mit dem mindestens einen mit einer Gehäuseteil-Öffnung zusammenwirkenden Einrastorgan und dem mindestens einen Federorgan ist besonders einfach und kostengünstig herstellbar. Hierbei ist es insbesondere vorteilhaft, wenn die Sensorleiterplatte ein Abdeckorgan aufweist, das lösbar oder unlösbar mit dem Trägerorgan und/oder der Sensorleiterplatte verbunden ist. Dieses Abdeckorgan kann dann als Angriffsfläche für das Federorgan dienen, um im endmontierten Zustand den Kraftschluss herzustellen. Zudem schützt das Abdeckorgan die Sensorleiterplatte hinsichtlich Verschmutzungen, wie Staub etc. Es bietet darüber hinaus auch einen Kontaktschutz in Bezug auf ESD (electrostatic discharge). Hierbei sind die Einrastorgane der Formschluss-Kraftschluss-Anordnung in vorteilhafter Weise am Abdeckorgan ausgebildet. Hierdurch ist eine besonders einfache Vormontage der Sensoreinheit möglich.

Das Federorgan ist in vorteilhafter Weise als Wellfeder ausgebildet, die im Abdeckorgan gelagert ist und mit einem Bodenteil des topfförmigen Gehäuseteils zusammenwirkt. Die Wellfeder bietet bei geringem Federweg eine hohe Vorspannung, wodurch die Sensoreinheit sehr kompakt ausgeführt werden kann. Zudem wird durch die Wellfeder eine sehr gleichmäßige Krafteinbringung in das Abdeckorgan ermöglicht.

In besonders vorteilhafter Weise weist das Abdeckorgan eine Aussparung für einen Anschlussstecker auf, der auf der Sensorleiterplatte vorgesehen ist, wobei die Aussparung mit einer entsprechenden Öffnung des topfförmigen Gehäuseteils zusammenwirkt. Hierbei kann die Öffnung eine Gehäuseteil-Öffnung für ein Einrastorgan ausbilden, das die Aussparung zumindest teilweise begrenzt. Durch das Einrasten des Einrastorgans wird die Gehäuseteil-Öffnung überdeckt, wodurch eine sichere Kabelführung zum Anschlussstecker gewahrleistet ist und ein Beschädigen der Kabel durch eine scharfkantige Öffnung des topfförmigen Gehäuseteils vermieden wird.

In besonders vorteilhafter Weise ist das topfförmige Gehäuseteil aus einem magnetisch leitenden Material hergestellt und bietet auf diese Weise einen

Schutz der Sensorleiterplatte gegenüber elektrostatischen Entladungen und äußere magnetische Störfelder.

Auch ist es besonders vorteilhaft, wenn das Trägerorgan einen Zentrierabsatz aufweist, über den die Sensorleiterplatte radial und/oder axial ausrichtbar ist.

Die Aufgabe wird ebenfalls gelöst durch ein Drehwinkelmesssystem zum Erfassen einer Drehbewegung einer Antriebswelle, die an einem freien Ende drehfest eine Magnet-Erreger-Einheit aufweist mit einer vorgenannten Sensoreinheit, wobei mindestens ein Magnet der Magnet-Erreger-Einheit mit der Antriebswelle verbunden ist und im Betriebszustand in einen der Sensorleiterplatte gegenüber gelegenen Hohlraum des Trägerorgans hineinreicht. Das Trägerorgan wird auf diese Weise als Abschirmkörper der Magnet-Erreger-Einheit.

In vorteilhafter Weise kann der Magnet in einer Magnetträgereinheit aus Kunststoff angeordnet sein, wodurch eine einfache Vorpositionierung im Hohlraum ermöglicht wird.

In einer weiteren vorteilhaften Ausführungsform kann eine Abschlussplatte vorgesehen sein, die auf das Trägerorgan anschließt und die bei einem komplett vormontierten Drehwinkelmesssystem die Krafteinleitung zum Kraftschluss gewährleistet.

Die Erfindung wird nun anhand einer Zeichnung näher erläutert, hierbei zeigt:
Figur 1 eine schematische Explosionsansicht einer erfindungsgemäßen Sensoreinheit,
Figur 2 eine schematische Explosionsansicht eines erfindungsgemäßen Drehwinkelmesssystems mit der Sensoreinheit aus Figur 1, und
Figur 3 eine Schnittansicht des Drehwinkelmesssystems aus Figur 2.

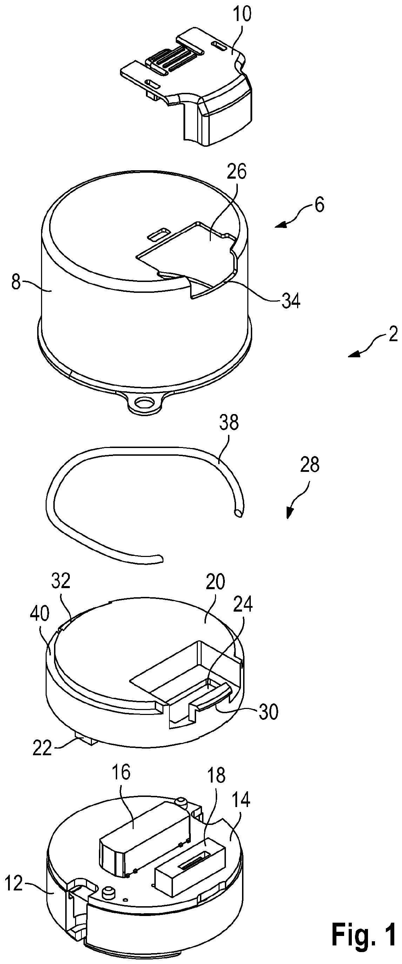

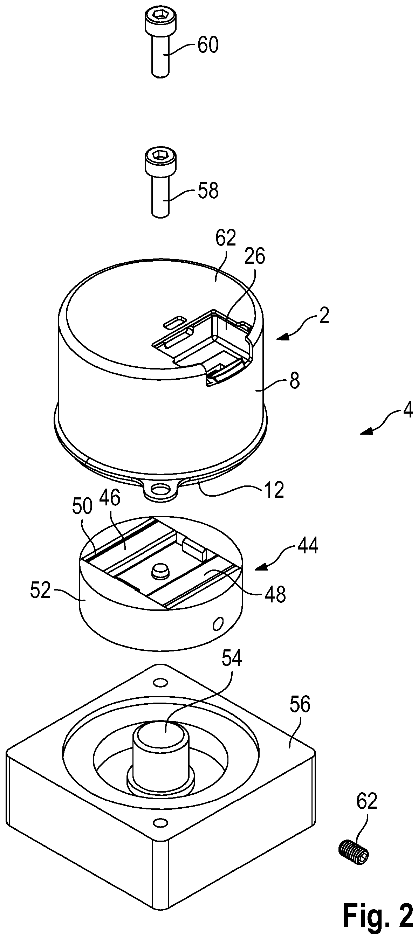

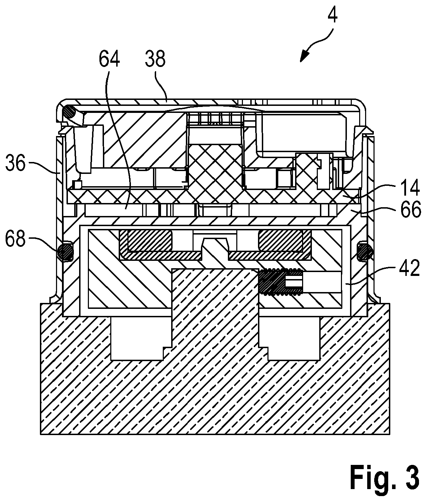

Figur 1 zeigt in schematisch perspektivischer Ansicht eine erfindungsgemäße Sensoreinheit 2, die wie nachfolgend in der Beschreibung zu den Figuren 2 und 3 näher erläutert wird, in einem erfindungsgemäßen Drehwinkelmesssystem 4 zum Einsatz kommt. Die Sensoranordnung 2 weist eine Gehäuseanordnung 6 auf, die im vorliegenden Ausführungsbeispiel im Wesentlichen aus einem topfförmigen Gehäuseteil 8 sowie einer beim Transport verwendeten Schutzkappe 10 besteht. Des Weiteren ist ein Trägerorgan 12 dargestellt, auf dem auf bekannte Weise eine Sensorleiterplatte 14 aufgeklebt ist. Es sind natürlich auch andere Befestigungsmöglichkeiten wie Pressen, Schrauben, etc. möglich.

Der Übersicht halber ist auf der Sensorleiterplatte 14, lediglich ein als Wiegand- oder Hall-Sensor ausgebildetes Sensororgan 16 und ein Anschlussstecker 18 dargestellt. Es sollte jedoch deutlich sein, dass auf der Sensorleiterplatte 14 eine Vielzahl von weiteren elektronischen Bauteilen vorgesehen sein kann.

Die Sensorleiterplatte 14 wird im montierten Zustand von einem Abdeckorgan 20 überdeckt, das auf bekannte Weise durch Rastmittel 22 mit dem Trägerorgan 12 und/oder der Sensorleiterplatte 14 verbunden ist. Es ist jedoch auch denkbar, dass die Abdeckorgan 20 auf einen vorstehenden Rand des Trägerorgans 12 aufgeklipst wird oder auf das Trägerorgan 12 oder die Sensorleiterplatte 14 aufgeklebt wird.

Das Abdeckorgan 20 besitzt eine Aussparung 24, die im montierten Zustand der Sensoreinheit 2 mit dem Anschlussstecker 18 und einer Öffnung 26 derart korrespondiert, dass im endmontierten Zustand des Drehwinkelmesssystems 4 ein nicht weiter dargestelltes Steckerorgan von außen in den Anschlussstecker 18 eingreifen kann. Erfindungsgemäß weist die Sensoreinheit 2 eine Formschluss-Kraftschluss-Anordnung 28 auf, die das Trägerorgan 12 mit der Sensorleiterplatte 14 im vormontierten Zustand beweglich im topfförmigen Gehäuseteil 8 lagert und im endmontierten Zustand des Drehwinkelmesssystems 4 das Trägerorgan 12 mit der Sensorleiterplatte 14 feststehend im topfförmigen Gehäuseteil 8 lagert. Die Formschluss-Kraftschluss-Anprdnung 28 weist im vorliegenden Ausführungsbeispiel zwei Rastorgane 30, 32 auf, die in entsprechende Öffnungen 34, 36 (siehe Figur 3) eingreifen und derart einen Formschluss bilden sowie ein als Wellfeder ausgebildetes Federorgan 38, das im endmontierten Zustand einen Kraftschluss herbeiführt. Als vorteilhaft kann es sich auch erweisen, wenn das Trägerorgan 12 einen hier nicht dargestellten Zentrierabsatz aufweist, über den die Sensorleiterplatte 14 radial und/oder axial ausrichtbar ist.

Die Montage der Sensoreinheit 2, die zu gleicher Zeit die Vormontage des Drehwinkelmesssystems 4 darstellt, wird nachfolgend beschrieben. Das Abdeckorgan 20 wird mittels der Rastmittel 22 mit dem Trägerorgan 12 verbunden und überdeckt auf diese Weise die Sensorleiterplatte 14. Dann kann das Federorgan 38 auf einen Rand 40 des Abdeckorgans 20 geklipst werden. Nachfolgend wird das Trägerorgan 12 mittels der Rastorgane 30, 32 in die Öffnungen 34, 36 des topfförmigen Gehäuseteils 8 derart eingerastet, dass eine axiale Beweglichkeit des Trägerorgans 12 gegeben ist. Die Wellfeder 38 führt in dieser Montagesituation noch keinen oder nur einen geringen Kraftschluss durch. Dadurch, dass das Rastorgan 30 in die Öffnung 34 eingreift, die Bestandteil der Aussparung 24 ist, ist ein Kabel eines Steckerorgans vor Beschädigungen aufgrund einer scharfen Kante des topfförmigen Gehäuseteils 8 geschützt. Zu Transportzwecken kann die Schutzkappe 10 aufgesetzt werden.

Figur 2 zeigt in einer schematischen Explosionsansicht das erfindungsgemäße Drehwinkelmesssystem 4. An der Sensoreinheit 2 ist an der Unterseite der Rand des Trägerorgans 12 zu erkennen, das aufgrund der beweglichen Lagerung aus dem topfförmigen Gehäuseteil 8 herausragen kann. Wie in Figur 3 deutlich dargestellt, besitzt das Trägerorgan 12 an der von der Sensorleiterplatte 14 abgewandten Seite einen Hohlraum 42 in den eine Magneterregereinheit 44 im endmontierten Zustand hineinreicht. Die Magneterregereinheit 44 besitzt zwei Permanentmagnete 46, 48, die mittels eines Einfassorgans 50 in einer Magnetträgeranordnung 52 eingeklipst sind und dann im endmontierten Zustand auf einer Antriebswelle 54 drehfest angeordnet sind. Es sollte deutlich sein, dass natürlich auch andere Magnete, wie zum Beispiel diametral magnetisierte Rundmagnete eingesetzt werden können. Die Antriebswelle 54 ist im vorliegenden Beispiel in einem Adaptergehäuse 56 gelagert. Alternativ zur Magnetträgeranordnung 52 kann eine Magnetträgerplatte vorgesehen sein. Die Endmontage des Drehwinkelmesssystems 4 erfolgt durch Aufpressen der Magnetträgeranordnung 52 auf die Antriebswelle 54 und das Aufsetzen der Sensoreinheit 2 auf das Adaptergehäuse 56. Die Endmontage kann alternativ jedoch auch durch Verschrauben erfolgen. Die Sensoreinheit 2 wird durch Schrauben 58, 60 fixiert, wobei die Unterseite des Trägerorgans 12 durch Anlage an das Adaptergehäuse 56 in Richtung eines Bodenteils 62 gedrückt und unter Umständen ausgerichtet wird und die Wellfeder 38 unter Vorspannung setzt, wodurch das Trägerorgan 12 mit der Sensorleiterplatte 14 fest durch Kraftschluss im topfförmigen Gehäuseteil 8 und unter Umständen fixiert ist. Mit 62 ist eine Schraube zur Sicherung einer rotatorischen Kopplung der Magnetträgeranordnung 52 mit der Antriebswelle 54 gekennzeichnet.

Figur 3 zeigt in einer Schnittansicht das Drehwinkelmesssystem 4 im endmontierten Zustand. Deutlich zu erkennen ist die eingedrückte Wellfeder 38, die die kraftschlüssige Fixierung der Sensoreinheit 2 im topfförmigen Gehäuseteil 8 gewährleistet. Ein Schutz der Sensorleiterplatte 14 gegenüber beispielsweise Schmutz, Feuchtigkeit oder Druckunterschiede ist dadurch gewährleistet, dass ein Raum 64 durch einen umlaufenden Steg 66 und eine O-Ring-Dichtung 68 abgedichtet sind.

## Patentansprüche

1. Sensoreinheit für ein Drehwinkelmesssystem (4) zum Erfassen einer Drehbewegung einer Antriebswelle (54), mit einer Gehäuseanordnung (6), die zumindest ein topfförmiges Gehäuseteil (8) aufweist, in der eine Sensorleiterplatte (14), die auf einem Trägerorgan (12) angeordnet ist, vorgesehen ist, derart, dass die Sensorleiterplatte (14) im Betriebszustand in Bezug auf die Antriebswelle (54) über Lagermittel (28) feststehend in der Gehäuseanordnung (6) gelagert ist, wobei die Lagermittel (28) für die Sensorleiterplatte (14) als Formschluss-Kraftschluss-Anordnung ausgebildet sind,
**dadurch gekennzeichnet, dass**
die Formschluss-Kraftschluss-Anordnung (28) mindestens ein mit einer Gehäuseteil-Öffnung (34, 36) zusammenwirkendes Einrastorgan (30, 32) und mindestens ein Federorgan (38) aufweist, derart, dass im Vormontagezustand das Trägerorgan (12) in axialer Richtung beweglich in der Gehäuseanordnung (6) gelagert ist und im Betriebszustand das Trägerorgan (12) über das Federorgan (38) in axialer Richtung kraftschlüssig im topfförmigen Gehäuseteil (8) fixiert ist.

2. Sensoreinheit nach Anspruch 1, **dadurch gekennzeichnet, dass** die Sensorleiterplatte (14) ein Abdeckorgan (20) aufweist, das lösbar oder unlösbar mit dem Trägerorgan (12) und/oder der Sensorleiterplatte (14) verbunden ist.

3. Sensoreinheit nach Anspruch 2, **dadurch gekennzeichnet, dass** die Einrastorgane (30, 32) der Formschluss-Kraftschluss-Anordnung (28) am Abdeckorgan (20) ausgebildet sind.

4. Sensoreinheit nach Anspruche 2 oder 3, **dadurch gekennzeichnet, dass** das Federorgan (38) als Wellfeder ausgebildet ist, die im Abdeckorgan (20) gelagert ist und mit einem Bodenteil (62) des topfförmigen Gehäuseteils (8) zusammenwirkt.

5. Sensoreinheit nach einem der Ansprüche 2 - 4, **dadurch gekennzeichnet, dass** das Abdeckorgan (20) eine Aussparung (24) für einen Anschlussstecker (18) aufweist, der auf der Sensorleiterplatte (14) vorgesehen ist, wobei die Aussparung (24) mit einer entsprechenden Öffnung (26) des topfförmigen Gehäuseteils (8) zusammenwirkt.

6. Sensoreinheit nach Anspruch 5, **dadurch gekennzeichnet, dass** die Öffnung (26) eine Gehäuseteil-Öffnung (34) für ein Einrastorgan (30) ausbildet, das die Aussparung (24) zumindest teilweise begrenzt.

7. Sensoreinheit nach einem der vorherigen Ansprüche, **dadurch gekennzeichnet, dass** das topfförmige Gehäuseteil (8) aus einem magnetisch leitenden Material hergestellt ist.

8. Sensoreinheit nach einem der vorherigen Ansprüche, **dadurch gekennzeichnet, dass** das Trägerorgan einen Zentrierabsatz aufweist, über den die Sensorleiterplatte radial und/oder axial ausrichtbar ist.

9. Drehwinkelmesssystem zum Erfassen einer Drehbewegung einer Antriebswelle (54), die an einem freien Ende drehfest eine Magnet-Erregereinheit (44) aufweist, mit einer Sensoreinheit (2) nach einem der vorherigen Ansprüche, **dadurch gekennzeichnet, dass** mindestens ein Magnet (46, 48) der Magnet-Erregereinheit (44) mit der Antriebswelle (54) verbunden ist und im Betriebszustand in einen der Sensorleiterplatte (14) gegenübergelegenen Hohlraum (42) des Trägerorgans (12) hineinreicht.

10. Drehwinkelmesssystem nach Anspruch 9, **dadurch gekennzeichnet, dass** der Magnet (46, 48) in einer Magnetträgeranordnung (52) aus Kunststoff angeordnet ist.

11. Drehwinkelmesssystem nach Anspruch 9, **dadurch gekennzeichnet, dass** eine Abschlussplatte vorgesehen ist, die auf das Trägerorgan (12) anschließt.

12. Drehwinkelmesssystem nach einem der Ansprüche 9 - 11, **dadurch gekennzeichnet, dass** der Magnet als Rundmagnet ausgebildet ist.

## Claims

1. A sensor unit for a rotational angle measurement system (4) for detecting a rotational movement of a drive shaft (54), having a housing arrangement (6) which comprises at least one pot-shaped housing part (8) and in which a sensor printed circuit board (14) arranged on a carrier member (12) is provided in such a way that, in the operating state, the sensor printed circuit board (14) is mounted in the housing arrangement (6) in a stationary manner with respect to the drive shaft (54) by bearing means (28), the bearing means (28) for the sensor printed circuit board (14) being configured as a form-fit/force-fit arrangement,
**characterized in that** the form-fit/force-fit arrangement (28) comprises at least one engaging member (30, 32), interacting with a housing part opening (34, 36), and at least one spring member (38), in such a way that the carrier member (12) is mounted to be movable in the axial direction in the housing arrangement (6) in the pre-assembled state and, in the operating state, the carrier member (12) is fixed in the axial direction in the pot-shaped housing part (8) in a force-fitting manner via the spring member (38).

2. The sensor unit according to claim 1, **characterized in that** the sensor printed circuit board (14) comprises a cover member (20) that is detachably or non-detachably connected to the carrier member (12) and/or the sensor printed circuit board (14).

3. The sensor unit according to claim 2, **characterized in that** the engaging members (30, 32) of the form-fit/force-fit arrangement (28) are provided at the cover member (20).

4. The sensor unit according to claim 2 or 3, **characterized in that** the spring member (38) is designed as a wave spring that is mounted in the cover member (20) and interacts with a bottom part (62) of the pot-shaped housing part (8).

5. The sensor unit according to claim 2-4, **characterized in that** the cover member (20) comprises a recess (24) for a connector plug (18) provided on the sensor printed circuit board (14), wherein the recess (24) interacts with a corresponding opening (26) of the pot-shaped housing part (8).

6. The sensor unit according to claim 5, **characterized in that** the opening (26) forms a housing part opening (34) for an engaging member (30) that at least partially limits the recess (24).

7. The sensor unit according to any one of the preceding claims, **characterized in that** the pot-shaped housing part (8) is made of a magnetically conducting material.

8. The sensor unit according to any one of the preceding claims, **characterized in that** the carrier member comprises a centering ledge via which the sensor printed circuit board can be aligned radially and/or axially.

9. A rotational angle measurement system for detecting a rotational movement of a drive shaft (54), which comprises a magnet exciter unit (44) at a free end in a rotationally fixed manner, with a sensor unit (2) according to any one of the preceding claims, **characterized in that** at least one magnet (46, 48) of the magnet exciter unit (44) is connected to the drive shaft (54) and extends, in the operating state, into a cavity (42) of the carrier member (12) opposite the sensor printed circuit board (14).

10. The rotational angle measurement system according to claim 9, **characterized in that** that magnet (46, 48) is arranged in a magnet carrier arrangement (52) made of plastic.

11. The rotational angle measurement system according to claim 9, **characterized in that** an end plate is provided that adjoins to the carrier member (12).

12. The rotational angle measurement system according to any one of claims 9-11, **characterized in that** the magnet is designed as a round magnet.

## Revendications

1. Unité de capteur pour un système de mesure d'angle de rotation (4) pour détecter un mouvement de rotation d'un arbre d'entrainement (54), comprenant un agencement de carter (6) avec au moins une partie de carter (8) en forme de pot, dans lequel une carte de circuit de capteur (14) disposé sur un élément de support (12) est prévu de sorte que dans l'état de fonctionnement, la carte de circuit de capteur (14) est montée de manière fixe dans le dispositif de logement (6) par rapport à l'arbre d'entrainement (54) par des moyens de palier (28), les moyens de palier (28) pour la carte de circuit de capteur (14) sont réalisés sous la forme d'un agencement à emboitement/ajustement forcé (28),
**caractérisée en ce que**
l'agencement à emboitement/ajustement forcé (28) comprend au moins un élément de verrouillage (30, 32) coopérant avec une ouverture de partie de carter (34, 36) et au moins un élément à ressort (38), de sorte dans l'état préassemblé l'élément de support (12) est supporté de manière mobile dans la direction axiale dans l'ensemble de carter (6) et que dans l'état de fonctionnement, il est fixé dans la direction axiale par ajustement forcé dans la partie de carter (8) en forme de pot par l'élément à ressort (38).

2. Unité de capteur selon la revendication 1, **caractérisée en ce que** la carte de circuit de capteur (14) comprend un élément de couvercle (20) qui est relié de manière amovible ou non amovible à l'élément de support (12) et/ou à la carte de circuit de capteur (14).

3. Unité de capteur selon la revendication 2, **caractérisée en ce que** les éléments de verrouillage (30, 32) de l'agencement de verrouillage à emboitement/ajustement forcé (28) sont formés sur l'élément de couvercle (20).

4. Unité de capteur selon la revendication 2 ou 3, **caractérisée en ce que** l'élément à ressort (38) est réalisé sous forme d'un ressort ondulé supporté dans l'élément de couvercle (20) et coopérant avec une partie inférieure (62) de la partie de carter en forme de pot (8).

5. Unité de capteur selon l'une des revendications 2-4, **caractérisée en ce que** l'élément de couvercle (20) présente un évidement (24) pour un connecteur (18) prévu sur la carte de circuit de capteur (14), l'évidement (24) coopérant avec une ouverture (26) de la partie de carter en forme de pot (8) correspondante.

6. Unité de capteur selon la revendication 5, **caractérisée en ce que** l'ouverture (26) forme une ouverture de partie de carter (34) pour un élément de verrouillage (30) délimitant au moins partiellement l'évidement (24).

7. Unité de capteur selon l'une quelconque des revendications précédentes, **caractérisée en ce que** la partie de carter en forme de pot (8) est réalisée en un matériau magnétique.

8. Unité de capteur selon l'une quelconque des revendications précédentes, **caractérisée en ce que** l'élément de support présente un épaulement de centrage par lequel la carte de circuit de capteur peut être alignée radialement et/ou axialement.

9. Système de mesure d'angle de rotation pour détecter un mouvement de rotation d'un arbre d'entrainement (54) qui présente une unité d'excitation magnétique (44) fixe en rotation à une extrémité libre, avec une unité de capteur (2) selon l'une quelconque des revendications précédentes, **caractérisé en ce qu'**au moins un aimant (46, 48) de l'unité d'excitation magnétique (44) est relié à l'arbre d'entrainement (54) et, dans l'état de fonctionnement, s'étend dans une cavité (42) de l'élément de support (12) opposée au carte de circuit de capteur (14).

10. Système de mesure d'angle de rotation selon la revendication 9, **caractérisé en ce que** l'aimant (46, 48) est disposé dans un agencement de support d'aimant (52) en matière plastique.

11. Système de mesure d'angle de rotation selon la revendication 9, **caractérisé en ce qu'**une plaque de fermeture est prévue qui s'aligne à l'élément de support (12).

12. Système de mesure d'angle de rotation selon l'une des revendications 9 - 11, **caractérisé en ce que** l'aimant est réalisé sous forme d'un aimant rond.
